(19) Europäisches Patentamt
European Patent Office
Office européen des brevets

(11) **EP 1 705 887 B1**

(12) **FASCICULE DE BREVET EUROPEEN**

(45) Date de publication et mention
de la délivrance du brevet:
**02.01.2019 Bulletin 2019/01**

(51) Int Cl.:
***H04M 3/56*** *(2006.01)*

(21) Numéro de dépôt: **06290439.6**

(22) Date de dépôt: **17.03.2006**

(54) **Etablissement d'une communication dans un réseau**

Erstellung von Kommunikationen in einem Netz

Establishment of a communication in a network

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **22.03.2005 FR 0502828**

(43) Date de publication de la demande:
**27.09.2006 Bulletin 2006/39**

(73) Titulaire: **Orange
75015 Paris (FR)**

(72) Inventeurs:
• **Benjelloun Touimi, Abdellatif
22300 Lannion (FR)**
• **Sollaud, Aurélien
22560 Trebeurden (FR)**
• **Mathieu, Bertrand
22300 Lannion (FR)**

(74) Mandataire: **Cabinet Plasseraud
66, rue de la Chaussée d'Antin
75440 Paris Cedex 09 (FR)**

(56) Documents cités:
**US-B1- 6 671 262**

EP 1 705 887 B1

Description

La présente invention concerne un procédé d'établissement de communication de données entre une pluralité de terminaux connectés à un réseau comprenant une pluralité de noeuds de réseau, et plus particulièrement un procédé de déploiement de téléconférence.

Lorsqu'une communication de téléconférence doit s'établir entre plus de deux terminaux, on parle de conférence multipoint. Un type de configuration répandu concerne les conférences multipoints centralisées, dans lesquelles la topologie réseau est en étoile avec une unité de contrôle multipoint (MCU pour Multipoint Control Unit), dite aussi pont de conférence, centralisée pour gérer les communications.

Ce pont de conférence (MCU) de type centralisé comprend un contrôleur multipoint et éventuellement un ou plusieurs processeurs multipoint de signaux audio, vidéo et de données. Chaque processeur multipoint (MP pour Multipoint Processor) comporte des processeurs consistant à combiner les flux audiovisuels entrant pour construire ceux de sortie, à réaliser une opération de mixage ou de commutation sur les signaux, ou à assurer l'aiguillage des signaux ou encore le multiplexage spatial des images en une seule. Le contrôleur multipoint (MC pour Multipoint Controller) assure la commande des conférences multipoints.

Dans la configuration centralisée, le pont de conférence est donc un organe nécessaire dans le réseau et séparé des terminaux.

Dans ce mode de fonctionnement, les terminaux se mettent en relation grâce aux commandes envoyées au contrôleur multipoint. Les conférences comme les terminaux peuvent avoir des identifiants, et un terminal entre dans une conférence d'une manière assez proche d'un appel entre terminaux.

Cependant, ce type de connexion est statique et ne permet qu'une faible optimisation de la connexion et de l'occupation de la bande passante. De plus, en raison de l'éloignement du pont par rapport aux terminaux, un retard de transmission, gênant pour l'interactivité et le confort de la communication, est souvent constaté. En outre, l'ensemble des communications est en général centralisé sur un unique pont de conférence, ce qui implique que ce pont comporte des moyens assez puissants pour gérer l'ensemble des communications de manière simultanée.

Le document US 6 671 262 décrit un système de téléconférence dans lequel un noeud peut être sélectionné selon des critères prédéterminés.

Un but de la présente invention est de fournir un procédé de communication entre une pluralité de terminaux permettant d'optimiser l'occupation de la bande passante du réseau, et d'offrir une configuration flexible. Un tel procédé offre aussi une amélioration de la qualité de service fourni aux utlilisateurs.

Ce but est résolu par l'objet des revendications indépendantes. Des modes de réalisation préférés sont définis par les revendications dépendantes.

L'invention propose ainsi un procédé d'établissement d'une communication de données entre une pluralité de terminaux connectés à un réseau comprenant une pluralité de noeuds dont au moins un est choisi pour établir une communication entre les terminaux.

Selon une définition actuellement préférée de l'invention, une partie au moins des noeuds du réseau sont des noeuds configurables et le procédé comprend les étapes suivantes :

a) sélection d'au moins un noeud configurable du réseau en fonction de critères prédéterminés ;
b) détection de la présence d'éventuels moyens de gestion de communication sur ce noeud ; et
c) envoi de moyens de gestion de communication vers ledit noeud en cas d'absence détectée des moyens de gestion de communication sur le noeud à l'étape b).

La présente invention vise aussi un module intervenant dans l'établissement d'une communication entre une pluralité de terminaux connectée à un réseau comprenant une pluralité de noeuds de réseau, le module étant connecté audit réseau et comprenant des moyens pour configurer de manière à rendre actif au moins un noeud choisi du réseau pour établir une communication entre les terminaux.

Selon une définition actuellement préférée du module au sens de l'invention, le module comprend :

a. des moyens de sélection d'au moins un noeud configurable du réseau pour sélectionner un noeud configurable en fonction de critères prédéterminés, une partie au moins des noeuds du réseau étant configurables ;

b. des moyens de détection de configuration adaptés pour détecter la présence de moyens de gestion de communication sur le noeud sélectionné ;

c. des moyens de téléchargement pour envoyer des moyens de gestion de communication vers ledit noeud en cas d'absence des moyens de gestion de communication, détectée par lesdits moyens de détection de configuration.

Enfin, l'invention vise également un produit programme d'ordinateur destiné à être stocké dans une mémoire d'un module capable d'établir une communication entre une pluralité de terminaux connectés à un réseau comprenant une pluralité de noeuds de réseau, caractérisé en ce qu'il comporte des instructions pour :

a) sélectionner au moins un noeud configurable du réseau en fonction de critères prédéterminés, une partie au moins des noeuds étant configurables ;

b) déterminer une configuration dudit noeud en détectant la présence d'éventuels moyens de gestion de communication sur ce noeud ; et

c) envoyer des moyens de gestion de communication vers ledit noeud en cas d'absence détectée des moyens de gestion de communication sur le noeud à lors de l'exécution de l'instruction b).

Grâce à cette invention, il est possible d'établir des communications de manière flexible, en fonction par exemple de la bande passante du réseau, ou de la charge de travail du noeud. On peut déployer, dynamiquement, c'est-à-dire quand il y en a besoin ou lorsque cela est possible, un programme d'ordinateur sur des noeuds spécifiques capables d'intercepter en temps réel un flux de données et d'appliquer les traitements des programmes d'ordinateur sur les paquets concernés. De plus, on peut choisir l'application la plus appropriée en fonction de la demande et rendre ainsi la structure de télécommunication souple. On entend par noeud configurable un noeud de réseau pouvant supporter des traitements. Ainsi, les noeuds configurables peuvent inclure des noeuds programmables comportant des moyens pour recevoir et exécuter un programme d'ordinateur, des noeuds adaptatifs comportant par exemple une application dont la configuration peut être modifiée de l'extérieur.

D'autres particularités et avantages de la présente invention apparaîtront dans la description ci-après d'exemples de réalisation non limitatifs, en référence aux dessins annexés, dans lesquels :

- la figure 1 représente un réseau dans lequel est mis en oeuvre un premier mode de réalisation du procédé conforme à l'invention ;
- la figure 2 représente un réseau dans lequel est mis en oeuvre un deuxième mode de réalisation du procédé conforme à l'invention ;
- la figure 3 est un organigramme conforme au procédé selon l'invention ; et
- la figure 4 est un schéma synoptique d'un module conforme à l'invention.

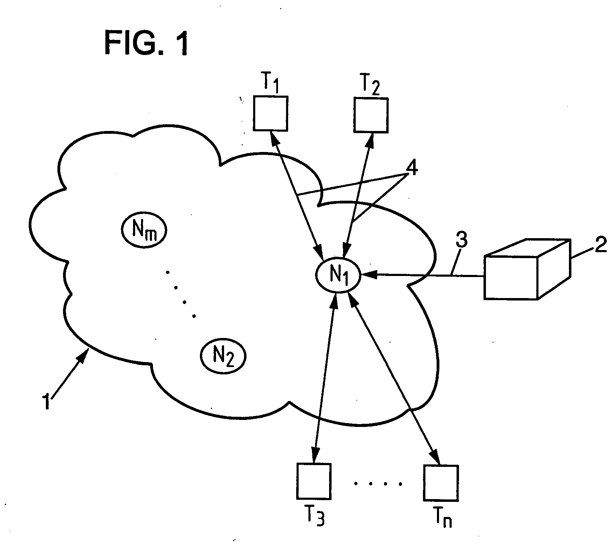

Comme représenté sur la figure 1, un premier mode réalisation du procédé conforme à l'invention est mis en oeuvre dans un réseau 1, auquel sont connectés une pluralité de terminaux T1 à Tn. De plus, dans cet exemple, le réseau comprend une pluralité de noeuds dont certains sont programmables N1 à Nm, formant ainsi un réseau programmable. De manière plus générale, l'invention peut être mise en oeuvre avec des noeuds configurables, c'est-à-dire pouvant supporter des traitements.

Les réseaux programmables sont des réseaux composés de noeuds programmables ayant la faculté de traiter les paquets aussi bien au niveau réseau qu'au niveau applicatif. De plus il est possible de télécharger dynamiquement des programmes d'ordinateur pour réaliser les traitements. Ce type de réseau est généralement vu comme un réseau de recouvrement (en anglais Overlay Network) au dessus du réseau physique. Par ailleurs, il est aussi possible que les noeuds du réseau physique soient eux-mêmes programmables.

La principale particularité de ce mode de réalisation réside dans le fait qu'un unique noeud est rendu actif par communication. Ainsi, si une communication doit être établie entre les terminaux T1 à Tn, au moins l'un d'eux contacte un contrôleur multipoint. Ce contrôleur va alors signaler cette requête à un module 2 par exemple installé sur le contrôleur multipoint. Ce module 2 a par exemple la connaissance de la topologie du réseau 1, éventuellement de la charge des noeuds. Par topologie courante du réseau, on comprend l'ensemble des connexions effectives au moment de l'établissement de la communication. Il est donc en mesure de prendre la décision pour sélectionner le noeud qui doit s'activer pour gérer les données de la nouvelle conférence en jouant le rôle du processeur multipoint.

Dans cet exemple, le noeud sélectionné par le module 2 est le noeud N1. Cette sélection repose sur des critères prédéterminés, comme par exemple :

- la proximité des terminaux par rapport au noeud,
- la charge de travail disponible du noeud,
- la bande passante du réseau au voisinage du noeud, ou encore
- un compromis de ces différents critères.

La proximité des terminaux peut être jugée notamment par le nombre de noeuds et de routeurs séparant le terminal du noeud, ou encore une distance purement géographique. Le nombre de terminaux à proximité d'un même noeud peut également être pris en compte. La charge de travail disponible du noeud dépend notamment de la puissance de calcul du noeud, et du nombre de tâches en cours d'exécution au sein du noeud. Elle dépend aussi de sa fiabilité ou de sa défaillance. La bande passante au voisinage du réseau doit être suffisamment importante pour que la communication entre les terminaux par l'intermédiaire du noeud soit possible.

Une fois un noeud sélectionné, par exemple le noeud N1, le module 2 détermine quel type de moyens de gestion est le plus adéquat, puis détecte la présence de ces moyens de gestion de communication sur ce noeud. Par exemple, ces moyens de gestion peuvent comporter de nouveaux protocoles supportés par le réseau, de nouvelles passerelles applicatives (Proxy) pouvant effectuer du traitement, des moyens de surveillance spécifiques à chaque protocole, des fonctions de gestion ou de services dans le réseau, des moyens d'agrégation de trafic spécifique ou de compression/décompression de données permettant d'économiser les ressources du réseau, des moyens pouvant effectuer un changement de format, des moyens de mixage et/ou multiplexage ou de redirection de données.

Si ces moyens de gestion de communication sont détectés comme absents, alors le module 2 envoie le programme d'ordinateur nécessaire pour fournir ces moyens de gestion au moyen d'un flux d'envoi 3. On obtient ainsi une grande souplesse de fonctionnalités pour chaque noeud du réseau. Une fois le programme d'ordinateur envoyé sur le noeud N1, celui-ci est activé pour traiter les données de la communication 4 entre les terminaux T1 à Tn.

En outre, le module 2 peut détecter si la version des moyens de gestion présente sur le noeud requiert une mise à jour. Si tel est le cas, le module 2 envoie la mise à jour correspondante, puis le noeud établit la communication entre les terminaux T1 à Tn. Il est possible de télécharger le programme d'ordinateur dans le noeud avec une transmission des données sur le chemin des données (approche "in-band" en anglais), ou par un autre chemin (approche "out-of-band" en anglais).

En conséquence, la mise en oeuvre de ce procédé permet une réduction du trafic dans le réseau d'opérateur. Les flux audio et vidéo sont en effet échangés avec le processeur multipoint situé sur le noeud configurable, ici programmable, le plus proche des terminaux des participants dans la téléconférence. Le fait de réaliser cette opération au plus près des terminaux permet une méthode optimale pour réduire le trafic sur le réseau. De plus, la probabilité de perte de paquet et le retard sont réduits puisqu'on minimise le nombre de routeurs traversés, ce qui améliore donc la qualité de la communication.

En outre, la complexité est mieux répartie dans le réseau. En effet, un processeur multipoint consacré à une conférence est exécuté de manière dynamique (après un éventuel téléchargement) dans une machine située sur un noeud programmable du réseau. Dans cette architecture, seule la partie commande peut rester centralisée dans le contrôleur.

Par ailleurs, cela permet une gestion dynamique des communications. En effet, lorsqu'une communication est établie, il est possible de surveiller l'état du noeud sélectionné N1 en surveillant au moins une caractéristique de ce noeud, par exemple une charge de travail du noeud, ou une bande passante du réseau ou encore une demande de nouvelles communications. Si l'état de ce noeud se dégrade, par exemple si la caractéristique surveillée est comprise dans une plage de valeurs prédéterminées, le module 2 peut sélectionner un autre noeud N2 conformément au procédé explicité précédemment par exemple, afin de passer le relais à ce noeud N2.

Ainsi, il n'est pas nécessaire de prévoir à l'avance la charge des noeuds ni de réserver des ressources préalablement. Ce concept de conférence sans réservation de ressources est très avantageux pour l'utilisateur, car il simplifie le service de téléconférence et encourage son utilisation de manière spontanée. Par ailleurs, il permet à l'opérateur la gestion à la demande des ressources en licence des logiciels de traitement des signaux (codage/décodage, mixage, transcodage, débruitage audio, spatialisation sonore, composition vidéo, etc) et aussi d'autres logiciels.

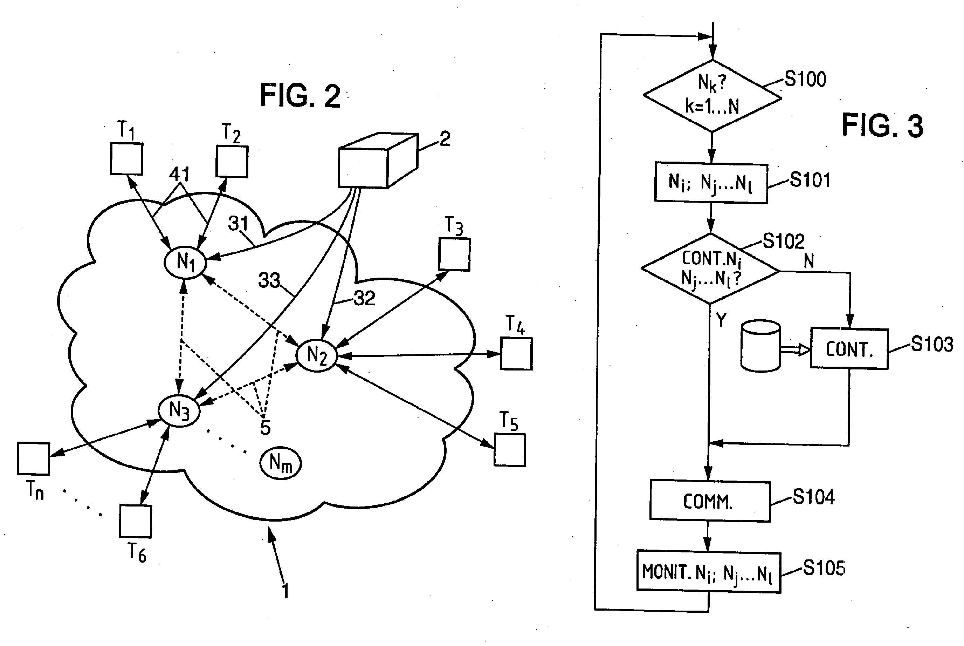

Selon un autre mode de réalisation, notamment représenté à la figure 2, on met en oeuvre une architecture encore plus distribuée. Dans ce cas, nous avons n terminaux et m noeuds et aucun des noeuds n'est vraiment central.

L'avantage de ce mode de réalisation est la possibilité de concentration partielle des flux média au plus près des terminaux, ce qui permet une réduction du trafic.

De manière identique au mode de réalisation précédent, pour établir une communication, un module 2 effectue une sélection de noeuds suivant les critères décrits précédemment. Cependant, au lieu de choisir un unique noeud, ce contrôleur choisit une pluralité de noeuds, par exemple les noeuds N1 à N3. Le nombre de noeuds choisi n'est pas fixé et peut varier d'une communication à une autre en fonction par exemple du nombre de terminaux impliqués dans la communication. Chaque terminal est attribué à un noeud choisi. Puis, les mêmes opérations de détermination de configuration et d'envoi de moyens de gestion le cas échéant sont effectuées. Par exemple, des flux de données 31, 32 et 33 permettent l'envoi du code du contrôleur vers respectivement les noeuds N1, N2, et N3.

Enfin, le module 2 peut rendre les noeuds N1 à N3 actifs de sorte que chacun d'eux établit une communication entre les terminaux attribués à ce noeud et les autres noeuds. Ainsi, le noeud N1 communique d'une part avec les terminaux T1 et T2 selon la communication 41, et d'autre part avec les autres noeuds selon la communication 5.

On a donc une meilleure distribution de l'occupation du réseau en ce qui concerne la bande passante et également les noeuds. De plus, les transferts de données ainsi distribués ont des débits moins importants et donc plus supportables pour le réseau.

Par exemple, si la communication met en jeu n terminaux et m noeuds, chaque noeud k possède un sous ensemble de $p_k$ terminaux, et on note $X_i^k$ les signaux émis par le terminal i vers le noeud k. Par conséquent, le noeud k reçoit de la part des terminaux de son sous-ensemble les signaux $X_i^k$, $1 \le i \le p_k$. Un traitement possible dans ce noeud est le mixage des signaux audio reçus c'est-à-dire la construction du signal

$$S_k = \sum_{i=1}^{p_k} X_i^k .$$ Il doit donc transmettre à l'ensemble des autres noeuds, ce même signal. A l'inverse, il reçoit des autres noeuds les signaux sommes $S_j$ et construit le signal $$R_k = \sum_{\substack{j=1 \\ j \ne k}}^{m} S_j .$$ Par conséquent, le noeud k doit transmettre au terminal i de son sous-ensemble la somme du signal émis par les autres terminaux de son sous-ensemble, c'est-à-dire $S_k - X_i^k$, et de l'ensemble des données $R_k$ en provenance des autres noeuds.

Au total, il transmettra le signal $\sum_{j=1}^{m} S_j - X_i^k$ au terminal i de son sous ensemble. On remarque par conséquent qu'on limite les transmissions nécessitant une forte bande passante aux communications entre le noeud et le terminal. Les communications entre noeuds nécessitent des bandes passantes plus faibles, ce qui évite de détériorer la bande passante sur une trop grande partie du réseau mais seulement au niveau des terminaux.

Ces deux modes de réalisation du procédé selon l'invention peuvent être appliqués à tous types de ponts de conférences, et par exemple à :

- un pont audio à mixage,

- un pont vidéo à composition,

- un pont audio ou vidéo à concaténation effectuant la concaténation de plusieurs trames média (audio ou vidéo) dans un même paquet pour factorisation d'entêtes IP.

Par ailleurs, le procédé peut se résumer par l'organigramme de la figure 3. Lors de l'établissement d'une communication, on observe l'état des noeuds à l'étape S100, afin de déterminer un noeud, ou éventuellement une pluralité de noeuds Ni, Nj, ... Nl, au travers desquels la communication va être réalisée lors de l'étape S101.

Une fois des noeuds déterminés, on détecte la présence de moyens de gestion de communication (CONT. Ni, Nj, ... Nl?) à l'étape S102. Si ces moyens de gestion de communication sont absents de ces noeuds, le code nécessaire à la formation de ces moyens est envoyé vers ces noeuds à l'étape S103.

Enfin, on établit la communication (S104), et on surveille l'état des noeuds à l'étape S105 (MONIT. Ni, Nj, ... Nl). Si l'état des noeuds nécessite un changement de noeuds, ce changement peut être effectué, comme décrit précédemment, selon un procédé identique d'établissement de communication.

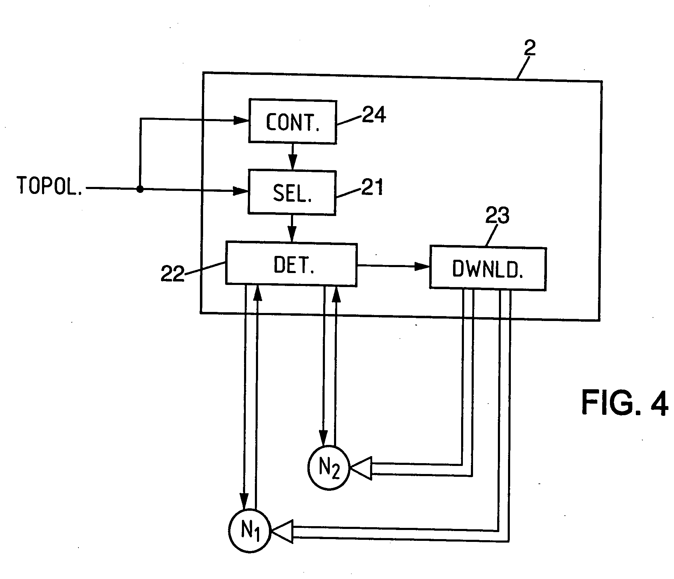

En outre, la figure 4 illustre un exemple d'un module conforme à l'invention. Dans ce module 2, par exemple installé sur un contrôleur multipoint, des moyens de sélection 21 de noeuds reçoivent des informations sur la topologie courante du réseau et sur des critères prédéterminés. Ces moyens de sélection 21 sélectionnent au moins un noeud à partir de ces critères et de la topologie, et communiquent la liste des noeuds à des moyens de détection de configuration 22. Les moyens de détection de configuration 22 déterminent alors si les noeuds de la liste possèdent des moyens de gestion de communication, et donnent l'ordre le cas échéant à des moyens de téléchargement 23 d'envoyer ces moyens de gestion de communication aux noeuds.

Lorsque la communication est établie, des moyens de surveillance 24 surveillent l'état du noeud et éventuellement la topologie du réseau. S'ils déterminent qu'un changement est nécessaire, comme cela a été décrit précédemment, ils commandent les moyens de sélection 21 de sorte que de nouveaux noeuds plus adéquats soient choisis.

**Revendications**

1. Procédé d'établissement d'une communication de données de téléconférence entre une pluralité de terminaux (T1,..., Tn) connectés à un réseau (1) comprenant une pluralité de noeuds de réseau (N1,..., Nm), dans lequel au moins un noeud choisi du réseau (1) établit une communication entre plus de deux terminaux (T1,..., Tn), dans lequel une partie au moins des noeuds sont des noeuds configurables, le procédé comportant les étapes suivantes, mises en oeuvre auprès d'un contrôleur multipoint, **caractérisé par**

   a) sélection d'au moins un noeud configurable (N1,..., Nm) du réseau en fonction de critères prédéterminés incluant au moins une topologie du réseau ;
   b) détection de la présence de programmes de traitement de données de communication par téléconférence avec plus de deux terminaux sur ce noeud ; et
   c) envoi de programmes de traitement de données de communication par téléconférence vers ledit noeud (N1,..., Nm) en cas d'absence détectée desdits programmes de traitement de données sur le noeud à l'étape b).

2. Procédé selon la revendication 1, dans lequel ledit au moins un noeud configurable (N1,..., Nm) du réseau est sélectionné en fonction de critères prédéterminés parmi au moins une topologie du réseau (1), une proximité des terminaux (T1,..., Tn), un état de la bande passante du réseau au voisinage du noeud, une charge de travail disponible dudit noeud et/ou un compromis entre ces critères.

3. Procédé selon la revendication 1 ou la revendication 2, dans lequel un unique noeud configurable (N1) établit la communication entre lesdits terminaux (T1,..., Tn).

4. Procédé selon la revendication 1 ou la revendication 2, dans lequel une pluralité de noeuds configurables (N1,..., Nm) établissent la communication entre lesdits terminaux (T1,..., Tn).

**5.** Procédé selon la revendication 4, dans lequel lors de l'étape (a), chaque noeud sélectionné (N1,..., Nm) est attribué à au moins un terminal (T1,..., Tn) pour établir une communication entre ledit un terminal attribué et les autres noeuds.

**6.** Procédé selon l'une quelconque des revendications précédentes, dans lequel, au cours de l'étape (b), on détermine si une mise à jour des programmes de traitement de données de communication est nécessaire, et dans lequel on envoie la mise à jour correspondante lors de l'étape (c).

**7.** Procédé selon l'une quelconque des revendications précédentes, dans lequel les programmes de traitement de données de communication envoyés au cours de l'étape (c) sont adaptés pour effectuer une opération parmi au moins une redirection de données, une composition de données, une compression de données, une décompression de données, un changement de format, un mixage, un multiplexage et/ou une combinaison de ces opérations.

**8.** Procédé selon l'une quelconque des revendications précédentes, dans lequel, une fois la communication établie :

e) on surveille au moins une caractéristique dudit noeud configurable ;
f) on choisit au moins un nouveau noeud configurable si la valeur d'au moins une caractéristique surveillée au cours de l'étape (e) est comprise dans une plage de valeurs prédéterminée.

**9.** Procédé selon la revendication 8, dans lequel la caractéristique surveillée comprend au moins un paramètre parmi une charge de travail du noeud, une bande passante du réseau, une demande de d'établissement de nouvelles communications, et/ou un compromis entre ces paramètres.

**10.** Procédé selon l'une quelconque des revendications précédentes, dans lequel on établit la communication pour une téléconférence entre les terminaux d'un réseau.

**11.** Module (2) intervenant dans l'établissement d'une communication par téléconférence entre une pluralité de terminaux (T1,..., Tn) connectés à un réseau comprenant une pluralité de noeuds (N1,..., Nm) de réseau, ledit module (2) étant connecté audit réseau et comprenant des moyens pour configurer de manière à rendre actif au moins un noeud choisi du réseau pour établir une communication entre plus de deux terminaux (T1,..., Tn) pour l'établissement de la téléconférence,
ledit module (2) étant **caractérisé en ce qu'**il comprend :

des moyens de sélection d'au moins un noeud configurable (N1,..., Nm) du réseau pour sélectionner un noeud en fonction de critères prédéterminés incluant au moins une topologie du réseau, une partie au moins des noeuds du réseau étant configurables ;
des moyens de détection de configuration adaptés pour détecter la présence de programmes de traitement de données de communication par téléconférence avec plus de deux terminaux sur le noeud sélectionné ;
des moyens de téléchargement pour envoyer des programmes de traitement de données de communication par téléconférence vers ledit noeud en cas d'absence desdits programmes de traitement de données, détectée par lesdits moyens de détection de configuration, et **en ce que** ledit module est installé, en service, dans un contrôleur multipoint.

**12.** Produit programme d'ordinateur destiné à être stocké dans une mémoire d'un module (2) selon la revendication 11 et comportant des instructions pour la mise en oeuvre du procédé selon l'une des revendications 1 à 10.

**Patentansprüche**

**1.** Verfahren zum Aufbau einer Kommunikation von Telekonferenzdaten zwischen mehreren Endgeräten (T1, ..., Tn), die mit einem Netz (1) verbunden sind, das mehrere Netzknoten (N1, ..., Nm) umfasst, wobei wenigstens ein ausgewählter Knoten des Netzes (1) eine Kommunikation zwischen mehr als zwei Endgeräten (T1, ..., Tn) aufbaut,
wobei wenigstens ein Teil der Knoten konfigurierbare Knoten sind, wobei das Verfahren die folgenden Schritte umfasst, die an einer Mehrpunkt-Steuereinheit ausgeführt werden, **gekennzeichnet durch**:

a) Auswahl wenigstens eines konfigurierbaren Knotens (N1, ..., Nm) des Netzes in Abhängigkeit von vorbestimmten Kriterien, zu denen wenigstens eine Topologie des Netzes gehört;
b) Erkennung des Vorhandenseins von Datenverarbeitungsprogrammen für eine Kommunikation durch Telekonferenz mit mehr als zwei Endgeräten an diesem Knoten; und
c) Senden von Datenverarbeitungsprogrammen für eine Kommunikation durch Telekonferenz an den Knoten (N1, ..., Nm) im Falle eines in Schritt b) erkannten Nichtvorhandenseins der Datenverarbeitungsprogramme an dem Knoten.

**2.** Verfahren nach Anspruch 1, wobei der wenigstens eine konfigurierbare Knoten (N1, ..., Nm) des Netzes in Abhängigkeit von vorbestimmten Kriterien aus wenigstens einer Topologie des Netzes (1), einer Nähe der Endgeräte (T1, ..., Tn), einem Zustand des Durchlassbereichs des Netzes in der Nähe des Knotens, einer verfügbaren Arbeitsbelastung des Knotens und/oder einem Kompromiss zwischen diesen Kriterien ausgewählt wird.

3. Verfahren nach Anspruch 1 oder Anspruch 2, wobei ein einziger konfigurierbarer Knoten (N1) die Kommunikation zwischen den Endgeräten (T1, ..., Tn) aufbaut.

4. Verfahren nach Anspruch 1 oder Anspruch 2, wobei mehrere konfigurierbare Knoten (N1, ..., Nm) die Kommunikation zwischen den Endgeräten (T1, ..., Tn) aufbauen.

5. Verfahren nach Anspruch 4, wobei in Schritt (a) jeder ausgewählte Knoten (N1, ..., Nm) wenigstens einem Endgerät (T1, ..., Tn) zugewiesen wird, um eine Kommunikation zwischen dem zugewiesenen einen Endgerät und den anderen Knoten aufzubauen.

6. Verfahren nach einem der vorhergehenden Ansprüche, wobei in Schritt (b) bestimmt wird, ob eine Aktualisierung der Kommunikationsdaten-Verarbeitungsprogramme erforderlich ist, und wobei die entsprechende Aktualisierung in Schritt (c) gesendet wird.

7. Verfahren nach einem der vorhergehenden Ansprüche, wobei die in Schritt (c) gesendeten Kommunikationsdaten-Verarbeitungsprogramme dafür ausgelegt sind, einen Arbeitsschritt aus wenigstens einer Umleitung von Daten, einer Zusammensetzung von Daten, einer Komprimierung von Daten, einer Dekomprimierung von Daten, einer Formatänderung, einem Mischen, einer Multiplexierung und/oder einer Kombination dieser Arbeitsschritte auszuführen.

8. Verfahren nach einem der vorhergehenden Ansprüche, wobei, nachdem die Kommunikation aufgebaut ist:

e) wenigstens ein charakteristisches Merkmal des konfigurierbaren Knotens überwacht wird;
f) wenigstens ein neuer konfigurierbarer Knoten gewählt wird, falls der Wert wenigstens eines in Schritt (e) überwachten charakteristischen Merkmals in einem vorbestimmten Wertebereich liegt.

9. Verfahren nach Anspruch 8, wobei das überwachte charakteristische Merkmal wenigstens einen Parameter aus einer Arbeitsbelastung des Knotens, einem Durchlassbereich des Netzes, einer Anforderung des Aufbaus neuer Kommunikationen und/oder einem Kompromiss zwischen diesen Parametern umfasst.

10. Verfahren nach einem der vorhergehenden Ansprüche, wobei die Kommunikation für eine Telekonferenz zwischen den Endgeräten eines Netzes aufgebaut wird.

11. Modul (2), welches am Aufbau einer Kommunikation durch Telekonferenz zwischen mehreren Endgeräten (T1, ..., Tn) beteiligt ist, die mit einem Netz verbunden sind, das mehrere Netzknoten (N1, ..., Nm) umfasst, wobei das Modul (2) mit dem Netz verbunden ist und Mittel zum Konfigurieren wenigstens eines ausgewählten Knotens des Netzes umfasst, so dass er aktiv wird, zum Aufbauen einer Kommunikation zwischen mehr als zwei Endgeräten (T1, ..., Tn) für den Aufbau der Telekonferenz, wobei das Modul (2) **dadurch gekennzeichnet ist, dass** es umfasst:

Mittel zur Auswahl wenigstens eines konfigurierbaren Knotens (N1, ..., Nm) des Netzes zum Auswählen eines Knotens in Abhängigkeit von vorbestimmten Kriterien, zu denen wenigstens eine Topologie des Netzes gehört, wobei wenigstens ein Teil der Knoten des Netzes konfigurierbar ist;
Mittel zur Konfigurationserkennung, die dafür ausgelegt sind, das Vorhandensein von Datenverarbeitungsprogrammen für eine Kommunikation durch Telekonferenz mit mehr als zwei Endgeräten an dem ausgewählten Knoten zu erkennen;
Mittel zum Fernladen, zum Senden von Datenverarbeitungsprogrammen für eine Kommunikation durch Telekonferenz an den Knoten im Falle eines von den Mitteln zur Konfigurationserkennung erkannten Nichtvorhandenseins der Datenverarbeitungsprogramme, und dadurch, dass das Modul im Betrieb in einer Mehrpunkt-Steuereinheit installiert ist.

12. Computerprogrammprodukt, welches dazu bestimmt ist, in einem Speicher eines Moduls (2) nach Anspruch 11 gespeichert zu werden, und Anweisungen für die Durchführung des Verfahrens nach einem der Ansprüche 1 bis 10 umfasst.

## Claims

1. Method of setting up a teleconference data communication between a plurality of terminals (T1,...,Tn) connected to a network (1) comprising a plurality of network nodes (N1,...,Nm), in which at least one chosen node of the network (1) sets up a communication between more than two terminals (T1,..., Tn), in which part at least of the nodes are configurable nodes, the method comprising the following steps implemented with a multipoint controller, **characterized by**:

a) selection of at least one configurable node (N1,..., Nm) of the network as a function of predetermined criteria including at least a topology of the network ;
b) detection of the presence of communication data processing programs based on teleconferencing with more than two terminals on this node; and
c) dispatching of communication data processing programs based on teleconferencing to said node (N1,..., Nm) in case of detected absence of said data processing programs on the node in step b).

2. Method according to Claim 1, in which said at least one configurable node (N1,..., Nm) of the network is selected as a function of criteria predetermined from among at least a topology of the network (1), a proximity of the terminals (T1,..., Tn), a state of the bandwidth of the network in the neighbourhood of the node, an available workload of said node and/or a compromise between these criteria.

3. Method according to Claim 1 or Claim 2, in which a single configurable node (N1) sets up the communication between said terminals (T1,..., Tn).

4. Method according to Claim 1 or Claim 2, in which a plurality of configurable nodes (N1,..., Nm) set up the communication between said terminals (T1,..., Tn).

5. Method according to Claim 4, in which during step (a), each node selected (N1,..., Nm) is allocated to at least one terminal (T1,..., Tn) to set up a communication between said one terminal allocated and the other nodes.

6. Method according to any one of the preceding claims, in which, in the course of step (b), one determines whether an update of the communication data processing programs is necessary, and in which the corresponding update is dispatched during step (c).

7. Method according to any one of the preceding claims, in which the communication data processing programs dispatched in the course of step (c) are adapted for performing an operation from among at least a data redirection, a data composition, a data compression, a data decompression, a change of format, a mixing, a multiplexing and/or a combination of these operations.

8. Method according to any one of the preceding claims, in which, once the communication has been set up:

e) at least one characteristic of said configurable node is monitored;
f) at least one new configurable node is chosen if the value of at least one characteristic monitored in the course of step (e) lies in a predetermined span of values.

9. Method according to Claim 8, in which the characteristic monitored comprises at least one parameter from among a workload of the node, a bandwidth of the network, a request to set up new communications, and/or a compromise between these parameters.

10. Method according to any one of the preceding claims, in which the communication is set up for a teleconference between the terminals of a network.

11. Module (2) intervening in the setting up of a teleconference communication between a plurality of terminals (T1,..., Tn) connected to a network comprising a plurality of network nodes (N1,... Nm), said module (2) being connected to said network and comprising means for configuring in such a way as to render active at least one chosen node of the network so as to set up a communication between more than two terminals (T1,..., Tn) for setting up the teleconference,
said module (2) being **characterized in that** it comprises:

means of selection of at least one configurable node (N1,..., Nm) of the network so as to select a node as a function of predetermined criteria including at least a topology of the network, part at least of the nodes of the network being configurable;
configuration detection means adapted for detecting the presence of communication data processing programs based on teleconferencing with more than two terminals on the node selected;
means of downloading for dispatching communication data processing programs based on teleconferencing to said node in case of absence of said data processing programs, detected by said configuration detection means, and **in that** said module is installed in service, in a multipoint controller.

12. Computer program product intended to be stored in a memory of a module (2) according to Claim 11 and comprising instructions for implementing the method according to one of Claims 1 to 10.

# FIG. 1

$T_1$   $T_2$

4

$N_m$

3

2

$N_1$

$N_2$

1

$T_3$ . . . . $T_n$

EP 1 705 887 B1

# FIG. 2

# FIG. 3

EP 1 705 887 B1

FIG. 4

EP 1 705 887 B1

**EP 1 705 887 B1**

## RÉFÉRENCES CITÉES DANS LA DESCRIPTION

**Documents brevets cités dans la description**

- US 6671262 B